# EUROPÄISCHE PATENTANMELDUNG

(11) **EP 2 980 434 A1**
(43) Veröffentlichungstag der Anmeldung: **03.02.2016**
(21) Anmeldenummer: 14179591.4
(22) Anmeldetag: 01.08.2014
(51) Int. Cl.: F16D 1/068, F16D 3/38, F16C 3/02

(54) **Wellenmitnehmer für eine Gelenkwelle, Gelenkwelle und Verfahren zur Herstellung eines Wellenmitnehmers**

(71) Anmelder: Spicer Gelenkwellenbau GmbH, 45143 Essen (DE)
(72) Erfinder: Krischak, Mirana, 45149 Essen (DE); Meineke, Manfred, 58454 Witten (DE); Stein, Thomas, 45128 Essen (DE)
(74) Vertreter: Neumann Müller Oberwalleney & Partner Patentanwälte

(57) **Zusammenfassung**

Wellenmitnehmer 10 für eine Gelenkwelle, wobei der Wellenmitnehmer 10 folgendes aufweist:
einen Mitnehmer 4 für ein Gelenk 1 der Gelenkwelle und
ein mitnehmerseitiges Schiebeelement 11 für einen Längenausgleich 16 der Gelenkwelle,
wobei das mitnehmerseitige Schiebeelement 11 mit dem Mitnehmer 4 reibverschweißt ist, wobei der Mitnehmer 4 eine Aufnahme 19 aufweist und
dass das mitnehmerseitige Schiebeelement 11 in der Aufnahme 19 des Mitnehmers 4 axial aufgenommen und innerhalb der Aufnahme 19 mit dem Mitnehmer 4 reibverschweißt ist.

## Beschreibung

Die Erfindung betrifft einen Wellenmitnehmer für eine Gelenkwelle, wobei der Wellenmitnehmer einen Mitnehmer für ein Gelenk der Gelenkwelle und ein mitnehmerseitiges Schiebeelement für einen Längenausgleich der Gelenkwelle aufweist und wobei das mitnehmerseitige Schiebeelement mit dem Mitnehmer reibverschweißt ist. Ferner betrifft die Erfindung eine Gelenkwelle mit einem solchen Wellenmitnehmer sowie ein Verfahren zur Herstellung eines solchen Wellenmitnehmers.

Gelenkwellen finden in unterschiedlichsten Antrieben für Maschinen, Anlagen und auch in Fahrzeugen, beispielsweise Schienenfahrzeugen oder Nutzkraftwagen, Einsatz. Gelenkwellen ermöglichen die Übertragung von Drehmoment bei nicht fluchtenden Drehachsen. Hierzu weisen Gelenkwellen eine Verbindungswelle auf, an deren freien Enden jeweils ein Gelenk, zum Beispiel ein Kreuzgelenk oder auch ein Gleichlaufdrehgelenk, angeordnet ist. Bei vielen Anwendungen sind die Drehachsen, die über die Gelenkwelle miteinander antriebsverbunden werden sollen, jedoch nicht starr zueinander gehalten. Vielmehr bewegen sich die Drehachsen und somit die Gelenkmittelpunkte der Gelenke zueinander. Hierdurch verändert sich der Abstand der Gelenkmittelpunkte zueinander, so dass für diese Anwendungsfälle innerhalb der Gelenkwelle ein Längenausgleich vorzusehen ist. Hierzu können Verschiebegelenke zum Einsatz kommen, die eine axiale Verschiebung zweier gelenkig miteinander verbundener Gelenkteile ermöglichen. Insbesondere bei der Verwendung von Kreuzgelenken ist jedoch innerhalb der Verbindungswelle ein Längenausgleich vorgesehen.

Aus der EP 2 333 360 A2 sind ein Wellenmitnehmer der eingangs genannten Art sowie eine Gelenkwelle mit einem solchen Wellenmitnehmer bekannt. Die Gelenkwelle weist zwei Kreuzgelenke auf, welche über eine Verbindungswelle zur Drehmomentübertragung drehfest miteinander verbunden sind. Die Verbindungswelle umfasst eine erste Wellenhälfte, die mit einer Gelenkgabel eines ersten der beiden Kreuzgelenke verbunden ist, und eine zweite Wellenhälfte auf, die mit einer Gelenkgabel eines zweiten der beiden Kreuzgelenke verbunden ist. Die beiden Wellenhälften sind über einen Längenausgleich innerhalb der Verbindungswelle axial verschiebbar und drehfest zueinander gehalten. Hierzu weißt eine der Wellenhälften eine Schiebehülse und die andere Wellenhälfte einen Schiebezapfen auf, die beide mit Längsverzahnungen versehen sind. Der Schiebezapfen ist in die Schiebehülse aufgenommen, wobei die Längsverzahnungen ineinander greifen. Da die Zähne der Längsverzahnungen parallel zu einer Längsachse der Gelenkwelle ausgerichtet sind, lassen sich der Schiebezapfen und die Schiebehülse axial zueinander verschieben, wobei über die Längsverzahnungen Drehmoment übertragen werden kann. Die Gelenkgabel des ersten Kreuzgelenks ist mit der ersten Wellenhälfte in Form des Schiebezapfens verbunden, wobei die erste Wellenhälfte als Hohlwelle gestaltet ist und stirnseitig mit der Gelenkgabel des ersten Kreuzgelenks reibverschweißt ist. Durch das Reibschweißen entstehen nach außen hin vorstehende gewölbte Abschnitte, die durch einen Entgratungsprozess entfernt werden müssen.

Aus der DE 23 48 629 A ist eine ähnliche Gelenkwelle bekannt, bei der die Gelenkgabel eines der beiden Kreuzgelenke einen massiven Schiebezapfen aufweist, der einstückig mit der Gelenkgabel ausgebildet ist und in die Schiebehülse axial verschiebbar und drehfest eingreift.

DE 28 49 541 A1 offenbart ebenfalls eine vergleichbare Gelenkwelle, bei der der Schiebezapfen hohl ausgebildet ist, wobei der Schiebezapfen einstückig mit der Gelenkgabel des Kreuzgelenks ausgebildet sein kann oder als separates Teil durch Tiefziehen hergestellt sein kann, wobei der tiefgezogene Schiebezapfen anschließend mit der Gelenkgabel des Kreuzgelenks verschweißt wird. Durch die Ausgestaltung des Schiebezapfens in Form einer Hohlwelle ergibt sich eine deutliche Gewichtsreduzierung verglichen zu massiv ausgestalteten Schiebezapfen.

Aufgabe der vorliegenden Erfindung ist es, einen Wellenmitnehmer für eine Gelenkwelle bereitzustellen, der möglichst einfach herstellbar ist.

Die Aufgabe wird erfindungsgemäß durch einen Wellenmitnehmer für eine Gelenkwelle gelöst, wobei der Wellenmitnehmer einen Mitnehmer für ein Gelenk der Gelenkwelle und ein mitnehmerseitiges Schiebeelement für einen Längenausgleich der Gelenkwelle aufweist und wobei das mitnehmerseitige Schiebeelement mit dem Mitnehmer reibverschweißt ist. Der Mitnehmer weist hierbei eine Aufnahme auf, wobei das mitnehmerseitige Schiebeelement in der Aufnahme des Mitnehmers axial aufgenommen und innerhalb der Aufnahme mit dem Mitnehmer reibverschweißt ist.

Dadurch, dass das mitnehmerseitige Schiebeelement innerhalb der Aufnahme des Mitnehmers reibverschweißt wird, wird das durch das Reibschweißen verdrängte Material in der Aufnahme aufgenommen, ohne dass dieses die Aufnahme verlässt. Somit bildet sich keine von außen zugängliche und damit störende Schweißwulst, die einen funktionalen Einfluss auf die äußere Gestaltung der Gelenkwelle haben könnte und somit nachbearbeitet werden müsste. Der sonst übliche weitere Fertigungsschritt der Bearbeitung der Schweißnaht bzw. Entfernung der Schweißwulst kann somit entfallen, so dass sich die Herstellung vereinfacht.

Vorzugsweise weist der Mitnehmer einen Hülsenabschnitt auf, der die Aufnahme bildet. Hierbei ist der Mitnehmer zusammen mit dem Hülsenabschnitt vorzugsweise einstückig hergestellt. Der Mitnehmer kann alternativ eine zentrale Bohrung, vorzugsweise eine Durchgangsbohrung, entlang der Längsachse aufweisen, die die Aufnahme bildet.

Zwischen dem Hülsenabschnitt und dem mitnehmerseitigen Schiebeelement ist vorzugsweise, zumindest im unverschweißten Zustand, ein Radialspalt vorgesehen. Der Radialspalt dient dazu, nach außen fließendes Material beim Reibschweißen aufnehmen zu können, so dass dieses nicht nach außen aus der Aufnahme austreten kann. Hierbei kann der Radialspalt nach dem Reibschweißen vollständig mit Material aufgefüllt sein.

Die Aufnahme weist eine die Aufnahme axial begrenzende Grundfläche auf, mit der das mitnehmerseitige Schiebeelement stirnseitig reibverschweißt ist. Die Grundfläche kann als geschlossene Fläche ausgebildet sein, so dass die Aufnahme topfförmig ausgebildet ist. Die Grundfläche kann auch zumindest im Wesentlichen kreisringförmig gestaltet sein, wobei die kreisringförmig gestaltete Grundfläche durch eine in axialer Richtung gestaltete Stufe gebildet sein kann. Hierbei kann die Aufnahme ebenfalls wieder topfförmig gestaltet sein, also zu einem Ende hin geschlossenen sein, oder im Anschluss an die kreisringförmige Grundfläche eine Durchgangsöffnung aufweisen.

Die Grundfläche kann zumindest im Wesentlichen auf einer Ebene angeordnet sein, die senkrecht zu einer Längsachse der Gelenkwelle angeordnet ist. Die Grundfläche kann alternativ auch konisch gestaltet sein, wobei sich die konische Grundfläche zum mitnehmerseitigen Schiebeelement hin öffnet.

Das mitnehmerseitige Schiebeelement kann als Hohlwelle gestaltet sein. Die Hohlwelle kann hierbei durch einen Umformprozess, wie einen Kaltumformprozess, hergestellt sein. Insbesondere, wenn das mitnehmerseitige Schiebeelement eine Längsverzahnung, zum Beispiel eine Außenlängsverzahnung, aufweist, die dazu bestimmt ist, in eine Längsverzahnung eines weiteren Schiebeelements einzugreifen, kann das mitnehmerseitige Schiebeelement zusammen mit der Längsverzahnung in einem einzigen Fertigungsprozess durch Umformen hergestellt werden.

Die Aufgabe wird ferner durch eine Gelenkwelle mit einem Wellenmitnehmer, wie vorangehend beschrieben, gelöst. Die Gelenkwelle weist hierbei ein erstes Gelenk mit einem ersten Gelenkteil in Form des Mitnehmers des Wellenmitnehmers auf und einen zweiten Gelenkteil, wobei die beiden Gelenkteile gelenkig miteinander verbunden sind. Ferner weist die Gelenkwelle ein zweites Gelenk auf. Die beiden Gelenke sind über eine Verbindungswelle drehmomentübertragend miteinander verbunden, wobei die Verbindungswelle einen Längenausgleich aufweist. Das mitnehmerseitige Schiebeelement des Wellenmitnehmers und ein wellenseitiges Schiebeelement sind Teil des Längenausgleichs, wobei das mitnehmerseitige Schiebeelement und das wellenseitige Schiebeelement drehfest und axial entlang einer Längsachse der Gelenkwelle zueinander verschiebbar verbunden sind.

Vorzugsweise handelt es sich bei den Gelenken um Kreuzgelenke, wobei der Mitnehmer des Wellenmitnehmers als Kreuzgelenkgabel gestaltet ist.

Vorzugsweise ist das mitnehmerseitige Schiebeelement in Form eines Schiebezapfens ausgebildet und das wellenseitige Schiebeelement als Schiebehülse, wobei der Schiebezapfen drehfest und axial verschiebbar in der Schiebehülse aufgenommen ist. Grundsätzlich ist es jedoch auch denkbar, dass das mitnehmerseitige Schiebeelement als Schiebehülse und das wellenseitige Schiebeelement als Schiebezapfen gestaltet ist.

Der Schiebezapfen weist hierbei eine Außenlängsverzahnung auf und die Schiebehülse eine Innenlängsverzahnung, wobei der Schiebezapfen mit seiner Außenlängsverzahnung drehfest und axial verschiebbar mit der Innenlängsverzahnung in Eingriff steht.

Die Aufgabe wird ferner durch ein Verfahren zur Herstellung eines voran beschriebenen Wellenmitnehmers gelöst, wobei das mitnehmerseitige Schiebeelement in die Ausnehmung des Mitnehmers eingeführt wird und anschließend innerhalb der Ausnehmung mit dem Mitnehmer reibverschweißt wird.

Hierbei wird das mitnehmerseitige Schiebeelement vorzugsweise mit dem Mitnehmer derart reibverschweißt, dass ein Radialspalt zwischen dem mitnehmerseitigen Schiebeelement und der Aufnahme des Mitnehmers zumindest teilweise durch eine Schweißwulst ausgefüllt wird.

Ein bevorzugtes Ausführungsbeispiel einer Gelenkwelle und eines Wellenmitnehmers gemäß der Erfindung wird im Folgenden anhand der Figuren näher erläutert. Hierin zeigt:
- Figur 1: eine Seitenansicht einer Gelenkwelle, teilweise geschnitten,
- Figur 2: eine Seitenansicht des Wellenmitnehmers gemäß Figur 1, teilweise geschnitten, und
- Figur 3: ein vergrößerter Ausschnitt der Reibschweißnaht am Wellenmitnehmer gemäß Figur 2.

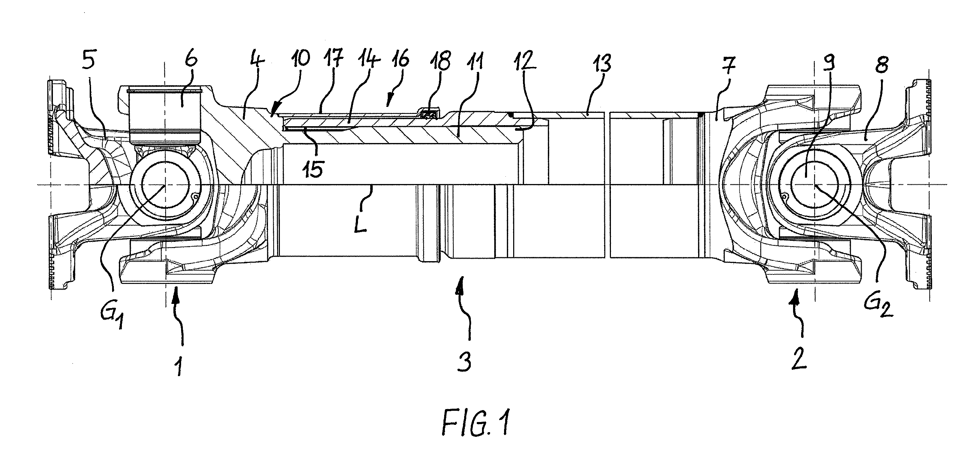

Die in Figur 1 dargestellte Ausführungsform einer Gelenkwelle umfasst ein erstes Gelenk 1 und ein zweites Gelenk 2, die beide als Kreuzgelenke ausgebildet sind und die über eine Verbindungswelle 3 drehfest und axial entlang einer Längsachse L zueinander verschiebbar verbunden sind. Das erste Gelenk 1 umfasst einen Mitnehmer in Form einer inneren Gelenkgabel 4 sowie einen weiteren Mitnehmer in Form einer äußeren Gelenkgabel 5. Die innere Gelenkgabel 4 und die äußere Gelenkgabel 5 sind über eine Zapfenkreuzgarnitur 6 um einen Gelenkmittelpunkt G₁ gelenkig miteinander verbunden.

Das zweite Gelenk 2 weist eine innere Gelenkgabel 7 und eine äußere Gelenkgabel 8 auf, die ebenfalls über eine Zapfenkreuzgarnitur 9 gelenkig um einen Gelenkmittelpunkt G₂ miteinander verbunden sind.

Die innere Gelenkgabel 4 des ersten Gelenks 1 ist Teil eines Wellenmitnehmers 10, der neben der inneren Gelenkgabel 4 ein mitnehmerseitiges Schiebeelement in Form eines Schiebezapfens 11 eines Längenausgleichs 16 der Verbindungswelle 3 umfasst. Der Schiebezapfen 11 ist, wie später noch näher erläutert wird, mit der inneren Gelenkgabel 4 verschweißt. Der Schiebezapfen 11 weist eine Außenlängsverzahnung 12 mit Zähnen auf, die parallel zur Längsachse L angeordnet sind.

Die Verbindungswelle 3 umfasst ein Rohr 13, das mit der inneren Gelenkgabel 7 des zweiten Gelenks 2 verschweißt und somit drehfest verbunden ist. An einem von der inneren Gelenkgabel 7 des zweiten Gelenks 2 abgewandten Ende ist das Rohr 13 mit einem wellenseitigen Schiebeelement in Form einer Schiebehülse 14 verschweißt. Die Schiebehülse 14 ist ebenfalls Bestandteil des Längenausgleichs 16 und weist eine Innenlängsverzahnung 15 auf. Der Schiebezapfen 11 ist in die Schiebehülse 14 eingeschoben, wobei die Außenlängsverzahnung 12 in Eingriff zu der Innenlängsverzahnung 15 steht. Beim Einsatz der Gelenkwelle, zum Beispiel im Antriebsstrang eines Nutzkraftfahrzeuges, können bei Einfederung einer angetriebenen Radachse die beiden Gelenkmittelpunkte G₁ und G₂ quer zur Längsachse L verschoben werden, wobei sich der axiale Abstand entlang der Längsachse L der beiden Gelenkmittelpunkte G₁, G₂ ändert. Um diese Änderung des Abstands auszugleichen, ist der Längenausgleich 16 vorgesehen, wobei der Schiebezapfen 11 innerhalb der Schiebehülse 14 verschoben wird. Über die Außenlängsverzahnung 12 und die Innenlängsverzahnung 14 bleibt eine Drehmomentübertragung gewährleistet.

Zur Abdichtung des Längenausgleichs 16 ist eine Dichthülse 17 vorgesehen, die mit der inneren Gelenkgabel 4 des ersten Gelenks 1 verbunden ist und den Längenausgleich 16 umschließt. An einem der inneren Gelenkgabel 4 des ersten Gelenks 1 abgewandten Ende der Dichthülse 17 weist die Dichthülse 17 einen Dichtring 18 auf, der in dichtender Anlage zu einer Außenumfangsfläche der Schiebehülse 14 steht.

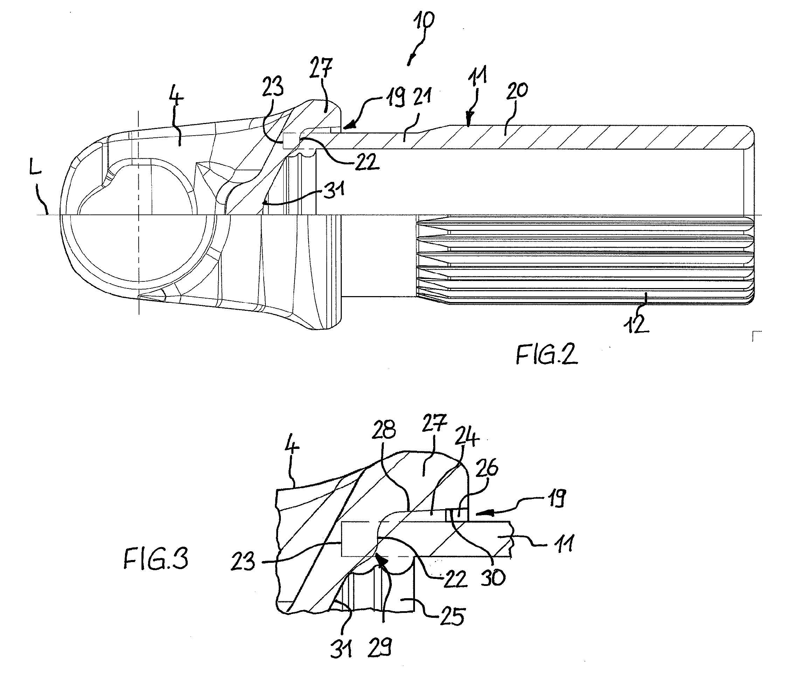

Die Figuren 2 und 3 zeigen den Wellenmitnehmer 10 der Gelenkwelle gemäß Figur 1 und werden im Folgenden zusammen beschrieben. Der Wellenmitnehmer 10 umfasst, wie oben bereits erläutert, einen Mitnehmer in Form einer inneren Gelenkgabel 4 sowie ein mitnehmerseitiges Schiebeelement in Form eines Schiebezapfens 11. Die innere Gelenkgabel 4 weist eine zum Schiebezapfen 11 offene Aufnahme 19 auf. Hierzu ist die innere Gelenkgabel 4 mit einem Hülsenabschnitt versehen, dessen innere Kontur 28 im Zustand vor dem Verschweißen des Schiebezapfens 11 mit der inneren Gelenkgabel 4 in dünner Linie dargestellt ist.

In die Aufnahme 19 ist der Schiebezapfen 11 eingesteckt. Der Schiebezapfen 11 weist einen Verbindungsabschnitt 21 auf, der teilweise in der Aufnahme 19 aufgenommen ist, und einen Verzahnungsabschnitt 20, der die Außenlängsverzahnung 12 aufweist. Innerhalb der Aufnahme 19 ist der Verbindungsabschnitt 21 des Schiebezapfens 11 mit der inneren Gelenkgabel 4 reibverschweißt. Die Außenkontur des Schiebezapfens 11 im unverschweißten Zustand ist in unterbrochenen Linien dargestellt.

Die innere Kontur 28 der Aufnahme 19 ist derart gestaltet, dass eine die Aufnahme 19 axial begrenzende Grundfläche 22 gebildet ist. Hierzu weist die Kontur 28 eine axiale Schulter bzw. Stufe 29 auf. Der Schiebezapfen 11 wird beim Herstellungsverfahren zunächst in die Aufnahme 19 eingeschoben bis eine axiale Stirnfläche 23 des Schiebezapfens 11 in Anlage zur Grundfläche 22 gelangt. Daraufhin wird der Schiebezapfen 11 mit der inneren Gelenkgabel 4 reibverschweißt. Zwischen dem Verbindungsabschnitt 21 des Schiebezapfens 11 und dem Hülsenabschnitt 27 bzw. der Aufnahme 19 ist ein Radialspalt 26 vorgesehen. Der Radialspalt 26 dient zur Aufnahme von Material, welches durch das Reibschweißen verdrängt wird. Beim Reibschweißen entsteht eine äußere Materialansammlung 24, welche den Radialspalt 26 im vorliegenden Fall teilweise ausfüllt. Ferner entsteht ebenso innen eine innere Materialansammlung 25 in Form von Schweißwülsten.

Die Grundfläche 22 ist auf einer gedachten Ebene angeordnet, welche senkrecht zur Längsachse L angeordnet ist und geht kurvenförmig in eine Innenumfangsfläche 30 der Aufnahme 19 über. Die Innenumfangsfläche 30 ist leicht konusförmig gestaltet und öffnet sich zum Schiebezapfen 11 hin. Die Innenumfangsfläche 30 kann ebenso kreiszylindrisch ausgebildet sein. Nach radial innen geht die Grundfläche 22 über einen Bogenabschnitt in eine Basisfläche 31 über, so dass die Aufnahme 19 topfförmig gestaltet ist und vom Schiebezapfen 11 weg weisend geschlossen ist. Alternativ kann anstelle der Basisfläche 31 oder innerhalb der Basisfläche 31 eine Durchgangsöffnung vorgesehen sein, das heißt, die innere Gelenkgabel 4 kann mit einer Durchgangsbohrung gestaltet sein.

Der Schiebezapfen 11 ist als Hohlwelle gestaltet. Grundsätzlich kann der Schiebezapfen 11 auch massiv ausgebildet sein.

### Bezugszeichenliste

- 1: erstes Gelenk
- 2: zweites Gelenk
- 3: Verbindungswelle
- 4: innere Gelenkgabel
- 5: äußere Gelenkgabel
- 6: Zapfenkreuzgarnitur
- 7: innere Gelenkgabel
- 8: äußere Gelenkgabel
- 9: Zapfenkreuzgarnitur
- 10: Wellenmitnehmer
- 11: Schiebezapfen (mitnehmerseitiges Schiebeelement)
- 12: Außenlängsverzahnung
- 13: Rohr
- 14: Schiebehülse (wellenseitiges Schiebeelement)
- 15: Innenlängsverzahnung
- 16: Längenausgleich
- 17: Dichthülse
- 18: Dichtring
- 19: Aufnahme
- 20: Verzahnungsabschnitt
- 21: Verbindungsabschnitt
- 22: Grundfläche
- 23: Stirnfläche
- 24: äußere Materialansammlung
- 25: innere Materialansammlung
- 26: Radialspalt
- 27: Hülsenabschnitt
- 28: innere Kontur
- 29: Schulter/Stufe
- 30: Innenumfangsfläche
- 31: Basisfläche

- L: Längsachse
- G₁: Gelenkmittelpunkt
- G₂: Gelenkmittelpunkt

## Patentansprüche

1. Wellenmitnehmer (10) für eine Gelenkwelle, wobei der Wellenmitnehmer (10) folgendes aufweist:
einen Mitnehmer (4) für ein Gelenk (1) der Gelenkwelle und
ein mitnehmerseitiges Schiebeelement (11) für einen Längenausgleich (16) der Gelenkwelle,
wobei das mitnehmerseitige Schiebeelement (11) mit dem Mitnehmer (4) reibverschweißt ist,
**dadurch gekennzeichnet,**
**dass** der Mitnehmer (4) eine Aufnahme (19) aufweist und
**dass** das mitnehmerseitige Schiebeelement (11) in der Aufnahme (19) des Mitnehmers (4) axial aufgenommen und innerhalb der Aufnahme (19) mit dem Mitnehmer (4) reibverschweißt ist.

2. Wellenmitnehmer nach Anspruch 1,
**dadurch gekennzeichnet,**
**dass** der Mitnehmer (4) einen Hülsenabschnitt (27) aufweist, der die Aufnahme (19) bildet.

3. Wellenmitnehmer nach Anspruch 2,
**dadurch gekennzeichnet,**
**dass** zwischen dem Hülsenabschnitt (27) und dem mitnehmerseitigen Schiebeelement (11) zumindest im unverschweißten Zustand ein Radialspalt (26) vorgesehen ist.

4. Wellenmitnehmer nach einem der vorangehenden Ansprüche,
**dadurch gekennzeichnet,**
**dass** die Aufnahme (19) eine die Aufnahme (19) axial begrenzende Grundfläche (22) aufweist, mit der das mitnehmerseitige Schiebeelement (11) stirnseitig reibverschweißt ist.

5. Wellenmitnehmer nach Anspruch 4,
**dadurch gekennzeichnet,**
**dass** die Grundfläche (22) im Wesentlichen kreisringförmig gestaltet ist.

6. Wellenmitnehmer nach einem der Ansprüche 4 oder 5,
**dadurch gekennzeichnet,**
**dass** die Aufnahme (19) in axialer Richtung eine Stufe (29) aufweist, die die Grundfläche (22) bildet.

7. Wellenmitnehmer nach einem der vorangehenden Ansprüche,
**dadurch gekennzeichnet,**
**dass** das mitnehmerseitige Schiebeelement (11) als, vorzugsweise kaltumgeformte, Hohlwelle gestaltet ist.

8. Wellenmitnehmer nach einem der vorangehenden Ansprüche,
**dadurch gekennzeichnet,**
**dass** das mitnehmerseitige Schiebeelement (11) eine Längsverzahnung (12), insbesondere eine Außenlängsverzahnung, aufweist.

9. Gelenkwelle mit einem Wellenmitnehmer (10) nach einem der vorangehenden Ansprüche, wobei die Gelenkwelle ferner folgendes aufweist:
ein erstes Gelenk (1) mit einem ersten Gelenkteil (4) in Form des Mitnehmers des Wellenmitnehmers (10) und einem zweiten Gelenkteil (5),
ein zweites Gelenk (2),
eine Verbindungswelle (3), die beide Gelenke (1, 2) drehmomentübertragend miteinander verbindendet und die einen Längenausgleich (16) aufweist,
wobei das mitnehmerseitige Schiebeelement (11) und ein wellenseitiges Schiebeelement (14) Teil des Längenausgleichs (16) sind, und
wobei das mitnehmerseitige Schiebeelement (11) und das wellenseitige Schiebeelement (14) drehfest und axial entlang einer Längsachse (L) der Gelenkwelle zueinander verschiebbar verbunden sind.

10. Gelenkwelle nach Anspruch 9,
**dadurch gekennzeichnet,**
**dass** das erste Gelenk (1) ein Kreuzgelenk ist und
**dass** der Mitnehmer (4) des Wellenmitnehmers (10) als Kreuzgelenkgabel gestaltet ist.

11. Gelenkwelle nach einem der Ansprüche 9 oder 10,
**dadurch gekennzeichnet,**
**dass** das mitnehmerseitige Schiebeelement des Wellenmitnehmers (10) in Form eines Schiebezapfens (11) ausgebildet ist, und
**dass** das wellenseitige Schiebeelement als Schiebehülse (14) gestaltet ist, wobei der Schiebezapfen (11) drehfest und axial verschiebbar in der Schiebehülse (14) aufgenommen ist.

12. Gelenkwelle nach Anspruch 11,
**dadurch gekennzeichnet,**
**dass** das der Schiebezapfen (11) eine Außenlängsverzahnung (12) aufweist und
**dass** die Schiebehülse (14) eine Innenlängsverzahnung (15) aufweist,
wobei der Schiebezapfen (11) mit seiner Außenlängsverzahnung (12) drehfest und axial verschiebbar mit der Innenlängsverzahnung (15) der Schiebehülse (14) in Eingriff ist.

13. Verfahren zur Herstellung eines Wellenmitnehmers nach einem der Ansprüche 1 bis 8,
**dadurch gekennzeichnet,**
**dass** das mitnehmerseitige Schiebeelement (11) in die Ausnehmung (19) des Mitnehmers (49 eingeführt wird und anschließend innerhalb der Ausnehmung (19) mit dem Mitnehmer (4) reibverschweißt wird.

14. Verfahren nach Anspruch 13,
**dadurch gekennzeichnet,**
**dass** das mitnehmerseitige Schiebeelement (11) mit dem Mitnehmer (4) derart reibverschweißt wird, dass ein Radialspalt (26) zwischen dem mitnehmerseitigen Schiebeelement (11) und der Aufnahme (19) des Mitnehmers (4) zumindest teilweise durch eine Materialansammlung (24) ausgefüllt wird.
